# EUROPEAN PATENT SPECIFICATION

(11) **EP 3 408 113 B1**
(45) Date of publication and mention of the grant of the patent: **16.09.2020**
(21) Application number: 17731266.7
(22) Date of filing: 17.01.2017
(51) Int. Cl.: B60C 9/20, B60C 9/22, B60C 15/00, B60C 11/02

(54) **A LOAD-BEARING STRUCTURE OF A SEPARATE-TREAD RADIAL TYRE AND RADIAL TYRE HAVING A SEPARATE TREAD**
LASTTRAGENDE STRUKTUR EINES RADIALREIFENS MIT SEPARATER LAUFFLÄCHE UND RADIALREIFEN MIT SEPARATER LAUFFLÄCHE
STRUCTURE PORTEUSE DE PNEU RADIAL À BANDE DE ROULEMENT SÉPARÉE ET PNEU RADIAL PRÉSENTANT UNE BANDE DE ROULEMENT SÉPARÉE

(30) Priority: 25.01.2016 IT UB20160196
(43) Date of publication of application: 05.12.2018
(73) Proprietor: Mai Italia S.r.l., 37050 Isola Rizza (Verona) (IT)
(72) Inventor: MAI, Renato, 37050 Isola Rizza (Verona) (IT)
(74) Representative: Anselmi, Davide
(86) International application number: PCT/IB2017/050235
(87) International publication number: WO 2017/130074

(56) References cited:
- US-A1- 2010 024 943

## Description

The present invention relates to a load-bearing structure of a separate-tread radial tyre and a radial tyre having a separate tread, in particular for heavy vehicles.

A tyre comprises a carcass having at least one carcass ply. The carcass ply comprises a central portion that extends between two annular anchoring structures arranged at an inner diameter of the tyre corresponding to the keying diameter of the tyre onto a respective mounting rim.

The carcass ply further comprises two end portions that extend continuously from the central portion to a free edge. Each end portion is turned back around one of the annular anchoring structures and arranged along the profile defined by the central portion, externally thereto. Externally to the carcass one or more belt layers are provided, having reinforcement chords crossing over or parallel to the circumferential extension direction of the tyre (zero degrees). Finally, external to the belt layers, a tread ring is arranged.

Traditionally, a tyre also comprises respective sidewalls arranged on the lateral surfaces of the carcass and a series of filling elements arranged on the annular anchoring structure and/or in a crown structure of the tyre itself.

Document GB 1334180 shows an example of a tyre having a separate tread comprising a load-bearing structure and a tread ring. The load-bearing structure comprises a radial carcass and one or more belt layers. The tread ring is vulcanised separately and inserted when the tyre is deflated onto the predisposed housings on the load-bearing structure. The adhesion between the tread ring and the load-bearing structure is entrusted to the friction generated by the pressure that the deflated load-bearing structure exerts on the tread ring.

Such tyres are rather expensive and have the drawback that the load-bearing structure deteriorates before the additional cost with respect to traditional tyres has been depreciated. In other words, the load-bearing structure must have an endurance at least equal to the number of tread rings that need to be replaced before having an effective economic advantage with respect to traditional tyres.

Another example of the prior art is described in document US2010/0024943 wherein the carcass ply has an end portion which is turned back around the annular anchoring structure.

In this context, the technical task underpinning the present invention is to provide a load-bearing structure of a separate-tread tyre and a tyre having a separate tread, in particular for heavy vehicles, which overcomes at least some of the drawbacks of the prior art mentioned above.

In particular, it is an object of the present invention to provide a load-bearing structure of a separate-tread tyre able to deteriorate after at least two or three replacements of the tread ring.

The set technical task and the specified aims are substantially attained by a load-bearing structure of a separate-tread tyre and a tyre having a separate tread, in particular for heavy vehicles, comprising the technical characteristics set down in one or more of the accompanying claims. The dependent claims correspond to different possible embodiments of the invention.

In particular, in accordance with a first aspect, the present invention relates to a load-bearing structure of a separate-tread tyre comprising at least one carcass ply. The carcass ply comprises a central portion that extends between two annular anchoring structures arranged at an inner diameter of the tyre corresponding to the keying diameter of the tyre onto a respective mounting rim. The carcass ply comprises two end portions that extend continuously from the central portion to a free edge. Each end portion is turned back around one of the annular anchoring structures and arranged along the profile defined by the central portion, externally thereto.

Each end portion has along the profile defined by the central portion, between the respective annular anchoring structure and the free edge, a longer length than the respective annular anchoring structure. The free edge is therefore also arranged beyond the same anchoring structure leaving a central deflating portion free, delimited by two free edges.

The carcass ply therefore has a longer length with respect to traditional tyres, giving the load-bearing structure greater resistance and therefore greater endurance. The end portions do not duplicate the central portion but leave the central deflating portion uncovered, delimited by the two free edges to allow easy assembly of the tyre by deflating the load-bearing structure and arranging the tread ring external thereto.

In accordance with a second aspect, the present invention relates to a separate-tread tyre comprising a load-bearing structure and a tread ring associated with the load-bearing structure in a radially external position thereto. Preferably the tread ring comprises at least one zero-degree ply. In one or more of the aspects specified, the present invention can comprise one or more of the following features.

Preferably the length of each end portion is such that the free edge is arranged at a crown structure of the load-bearing structure.

Preferably the length of each end portion is such that the free edges are arranged facing one another at the centerline of the load-bearing structure. Preferably the deflating portion has, along the profile defined by the central portion, a shorter length than the length of the end portions.

Preferably the length of each end portion is such that the free edges are arranged beyond the respective filling elements arranged between the sidewalls and a crown structure of the load-bearing structure.

Preferably, a crown structure is provided, having a zero-degree belt layer arranged radially external to the carcass ply. The zero-degree belt layer is interrupted at the central deflating portion.

Preferably the crown structure comprises belt layers crossing over, preferably at 30 degrees, arranged radially external to the zero-degree belt layer.

Preferably filling elements are provided, arranged between the sidewalls and a crown structure of the load-bearing structure, which have a hardness of at least 80 shore.

Preferably a crown structure is provided having, at the most radially external surface of the tyre, grooves and ribs adapted to create a shape coupling with the tread ring.

Further characteristics and advantages of the present invention will more fully emerge from the indicative, and thus non-limiting description of a preferred but not exclusive embodiment of a load-bearing structure of a separate-tread tyre and a relative tyre having a separate tread.

This description will be explained below with reference to the appended figures, provided solely for indicative and therefore non-limiting purposes, in which:

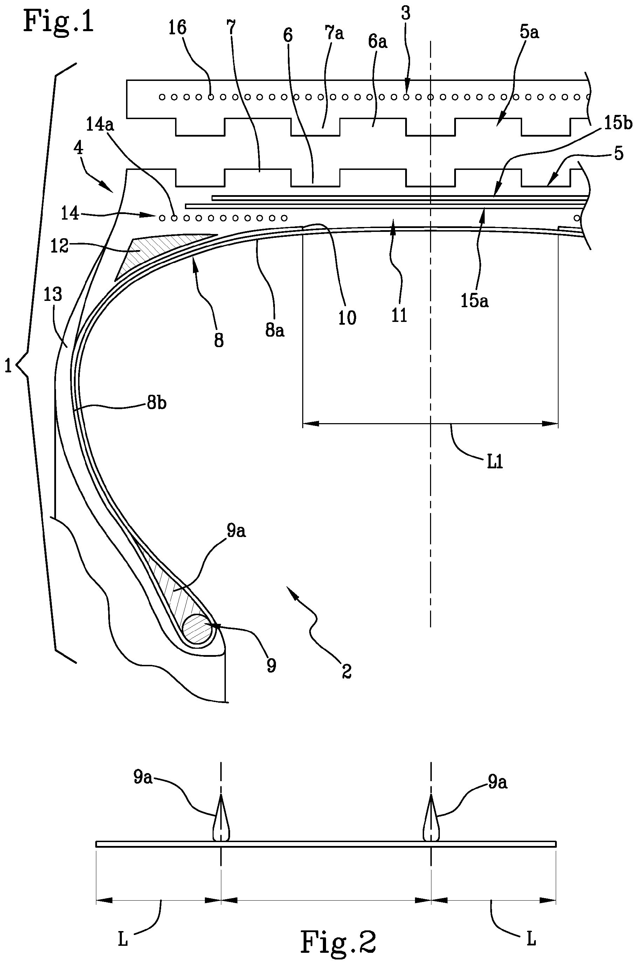

figure 1 schematically illustrates an axial sectional view of a separate-tread tyre during the assembly step;
figure 2 schematically illustrates only the carcass ply in the turn-up step. With reference to the appended figures, 1 generally indicates a separate-tread radial tyre, particularly suitable for heavy vehicles.

The separate tread tyre 1 comprises a load-bearing structure 2 and a tread ring 3 that can be associated with the load-bearing structure 2 in a radially external position thereto.

The load-bearing structure 2 comprises a crown structure 4 having, at its most radially external surface 5, grooves 6 and ribs 7 parallel to the circumferential extension direction of the tyre and adapted to create a shape coupling with the tread ring 3. Likewise, the tread ring 3 has, at a more radially internal surface 5a, similar grooves 6a and ribs 7a parallel to _the circumferential extension direction of the tyre and adapted to create a shape coupling with the load-bearing structure. Preferably, the grooves 6 and ribs 7 have inclined lateral walls so as to facilitate the extraction of the ring 3 from the tread. In detail, such lateral walls are inclined so that the grooves 6 are tapered broadening outwards. Likewise, the grooves 6a and ribs 7a of the ring 3 are counter-shaped to the grooves 6 and the ribs 7.

The load-bearing structure 2 comprises at least one carcass ply 8.

The carcass ply 8 comprises a central portion 8a and two end portions 8b. The central portion 8a extends between two annular anchoring structures 9 arranged at an inner diameter of the tyre corresponding to the keying diameter of the tyre onto a respective mounting rim.

The two end portions 8b extend continuously from the central portion 8a to a free edge 10.

Each end portion 8b is turned back around one of the annular anchoring structures 9 and arranged along the profile defined by the central portion, externally thereto.

Each annular anchoring structure 9 comprises one or more filling elements 9a around which the carcass ply 8 is turned back.

Each end portion 8b has along the profile defined by the central portion 8a, between the respective annular anchoring structure 9 and the free edge 10, a length "L" which is greater than the height of the respective annular anchoring structure (measured according to a direction extending along the end portion 8b and almost parallel to a radial direction of the tyre) such as to arrange the free edge beyond the anchoring structure itself leaving free a deflating central portion 11 delimited by free edges. Preferably the length "L" of each end portion 8b is such that the corresponding free edge 10 is arranged at the crown structure 4 of the load-bearing structure. Even more preferably the length "L" of each end portion 8b is such that the free edges 10 are arranged facing one another at the halfway line of the load-bearing structure, for example at a distance "L1".

In accordance with a possible embodiment, the deflating portion 11 has, along the profile defined by the central portion 8a, a shorter length "L1" than the length of the end portions 8b.

According to a possible embodiment, wherein filling elements 12 are provided, arranged between sidewalls 13 and the crown structure 4 of the load-bearing structure, the length "L" of each end portion 8b is such that the free edges 10 are arranged beyond the respective filling elements 12.

The filling elements 12 have a hardness of at least 80 shore.

In accordance with a possible embodiment, the crown structure 4 may further have a zero-degree belt layer 14 arranged radially external to the carcass ply 8. The zero-degree belt layer 14 is interrupted at the central deflating portion 11 defining two portions 14a symmetrically arranged at a determined distance from a centerline of the tyre.

In accordance with a possible embodiment, the crown structure 4 may further have belt layers 15-15b crossing over preferably at 30 degrees, arranged radially external to the zero-degree belt layer 14.

In accordance with a possible embodiment, the tread ring 3 comprises at least one zero-degree ply 16.

The present invention attains the set aims. The end portions 8b are turned back along almost the whole length of the central portion 8a increasing the resistance of the tyre and in particular of the load-bearing structure. By ensuring to leave a central deflating portion free, it is possible to combine the opposing requirements of increasing the resistance of the load-bearing structure and facilitating the assembly of the tyre,

In fact, such assembly takes place by deflating the load-bearing structure hence zeroing the friction generated by the pressure that the deflated load-bearing structure exerts on the tread ring and therefore the adhesion between the tread ring and the load-bearing structure. Subsequently after deflating the tyre the worn tread ring is removed in the axial direction and the new tread ring is placed in a radially external position to the crown structure 4.

By restoring the pressure within the load-bearing structure the adhesion is restored between the tread ring and the load-bearing structure, therefore the assembly is complete.

Good resistance of the load-bearing structure is guaranteed by arranging the free edges at the crown structure. Such resistance may be further increased by arranging the free edges facing one another at the centerline of the load-bearing structure.

The assembly is further facilitated and made more secure thanks to the presence of grooves and ribs parallel to the circumferential extension direction of the tyre for preventing the entry of any impurities or dirt.

## Claims

1. A load-bearing structure (2) of a separate-tread radial tyre (1) comprising at least one carcass ply (8), said carcass ply comprising:
a central portion (8a) that extends between two annular anchoring structures (9) arranged at an inner diameter of the tyre corresponding to the keying diameter of the tyre onto a respective mounting rim, and
two end portions (8b) that extend continuously from said central portion (8a) to a free edge (10), wherein each end portion (8b) is turned back around one of the annular anchoring structures (9) and arranged along the profile defined by the central portion (8a), externally thereto,
each end portion (8b) has along the profile defined by the central portion (8a), between the respective annular anchoring structure (9) and said free edge (10), a length (L) greater than a height of the respective annular anchoring structure (9) such that said free edge (10) is arranged beyond the annular anchoring structure itself and leaving a central deflating portion (11) free, delimited by said free edges (10);
**characterised in that** the free edge (10) of the end portion (8b) of the carcass ply (8) extends up to a crown structure (4) of said load-bearing structure in such a way that said free edge (10) is arranged at the crown structure (4) of the load-bearing structure.

2. The load-bearing structure of a separate-tread tyre according to claim 1, wherein said length (L) of each end portion (8b) is such as to arrange said free edges (10) facing one another at the centerline of the load-bearing structure.

3. The load-bearing structure of a separate-tread tyre according to one or more of the preceding claims, wherein said deflating portion (11) has, along the profile defined by the central portion (8a), a shorter length (L1) than the length (L) of the end portions (8b).

4. The load-bearing structure of a separate-tread tyre according to one or more of the preceding claims, wherein said length (L) of each end portion (8b) is such as to arrange said free edges (10) beyond respective filling elements (12) arranged between the sidewalls (13) and a crown structure (4) of the load-bearing structure.

5. The load-bearing structure of a separate-tread tyre according to one or more of the preceding claims, comprising a crown structure (4) having a zero-degree belt layer (14) arranged radially externally to the carcass ply (8), wherein said zero-degree belt layer (14) is interrupted at the central deflating portion (11).

6. The load-bearing structure of a separate-tread tyre according to claim 5, wherein said crown structure (4) comprises belt layers (15a, 15b) crossing over, preferably at 30 degrees, arranged radially external to the zero-degree belt layer (14).

7. The load-bearing structure of a separate-tread tyre according to one or more of the preceding claims, comprising filling elements (12) arranged between the sidewalls (13) and a crown structure (4) of the load-bearing structure wherein said filling elements (12) have a hardness of at least 80 shore.

8. The load-bearing structure of a separate-tread tyre according to one or more of the preceding claims, comprising a crown structure (4) having, at a more radially external surface (5), grooves and ribs (6, 7) adapted to provide a shape coupling with a tread ring (3).

9. A separate-tread radial tyre (1) comprising a load-bearing structure (2) according to one or more of the preceding claims and a tread ring (3) associated with said load-bearing structure (2) in a radially external position thereto through a shape coupling.

10. The separate-tread radial tyre according to claim 9, wherein said tread ring (3) comprises at least one zero-degree ply (16).

## Patentansprüche

1. Lasttragende Struktur (2) eines Radialreifens (1) mit separater Lauffläche, umfassend mindestens eine Karkassenlage (8), wobei die Karkassenlage umfasst:
einen zentralen Abschnitt (8a), der sich zwischen zwei ringförmigen Verankerungsstrukturen (9) erstreckt, die an einem Innendurchmesser des Reifens angeordnet sind, der dem Felgendurchmesser des Reifens auf einer jeweiligen Montagefelge entspricht, und
zwei Endabschnitten (8b), die sich durchgehend vom zentralen Abschnitt (8a) zu einer freien Kante (10) erstrecken, wobei ein jeder Endabschnitt (8b) um eine der ringförmigen Verankerungsstrukturen (9) zurückgedreht und entlang des durch den zentralen Abschnitt (8a) definierten Profils außen dazu angeordnet ist,
wobei ein jeder Endabschnitt (8b) entlang des durch den zentralen Abschnitt (8a) definierten Profils zwischen der jeweiligen ringförmigen Verankerungsstruktur (9) und der freien Kante (10) eine Länge (L) aufweist, die größer als eine Höhe der jeweiligen ringförmigen Verankerungsstruktur (9) ist, sodass die freie Kante (10) jenseits der ringförmigen Verankerungsstruktur selbst angeordnet ist und einen zentralen Ablassabschnitt (11) frei lässt, der durch die freien Kanten (10) begrenzt ist;
**dadurch gekennzeichnet, dass** sich die freie Kante (10) des Endabschnitts (8b) der Karkassenlage (8) bis zu einer Kronenstruktur (4) der lasttragenden Struktur erstreckt, sodass die freie Kante (10) an der Kronenstruktur (4) der lasttragenden Struktur angeordnet ist.

2. Lasttragende Struktur eines Reifens mit separater Lauffläche nach Anspruch 1, wobei die Länge (L) eines jeden Endabschnitts (8b) so ausgestaltet ist, dass die freien Kanten (10) einander an der Mittellinie der lasttragenden Struktur gegenüberliegen.

3. Lasttragende Struktur eines Reifens mit separater Lauffläche nach einem oder mehreren der vorhergehenden Ansprüche, wobei der Ablassabschnitt (11) entlang des durch den zentralen Abschnitt (8a) definierten Profils eine kürzere Länge (L1) als die Länge (L) der Endabschnitte (8b) aufweist.

4. Lasttragende Struktur eines Reifens mit separater Lauffläche nach einem oder mehreren der vorhergehenden Ansprüche, wobei die Länge (L) eines jeden Endabschnitts (8b) so ausgestaltet ist, dass die freien Kanten (10) jenseits jeweiliger Füllelemente (12), die zwischen den Seitenwänden (13) und einer Kronenstruktur (4) der lasttragenden Struktur angeordnet sind, angeordnet werden.

5. Lasttragende Struktur eines Reifens mit separater Lauffläche nach einem oder mehreren der vorhergehenden Ansprüche, umfassend eine Kronenstruktur (4) mit einer Null-Grad-Gürtelschicht (14), die radial außerhalb der Karkassenlage (8) angeordnet ist, wobei die Null-Grad-Gürtelschicht (14) am zentralen Ablassabschnitt (11) unterbrochen ist.

6. Lasttragende Struktur eines Reifens mit separater Lauffläche nach Anspruch 5, wobei die Kronenstruktur (4) Gürtelschichten (15a, 15b) umfasst, die sich kreuzen, vorzugsweise bei 30 Grad, und radial außerhalb der Null-Grad-Gürtelschicht (14) angeordnet sind.

7. Lasttragende Struktur eines Reifens mit separater Lauffläche nach einem oder mehreren der vorhergehenden Ansprüche, umfassend Füllelemente (12), die zwischen den Seitenwänden (13) und einer Kronenstruktur (4) der lasttragenden Struktur angeordnet sind, wobei die Füllelemente (12) eine Härte von mindestens 80 Shore aufweisen.

8. Lasttragende Struktur eines Reifens mit separater Lauffläche nach einem oder mehreren der vorhergehenden Ansprüche, umfassend eine Kronenstruktur (4), die an einer radial weiter äußeren Fläche (5) Rillen und Rippen (6, 7) aufweist, die angepasst sind, um eine formschlüssige Kupplung mit einem Laufflächenring (3) bereitzustellen.

9. Radialreifen (1) mit separater Lauffläche, umfassend eine lasttragende Struktur (2) nach einem oder mehreren der vorhergehenden Ansprüche und einen Laufflächenring (3), der mit der lasttragenden Struktur (2) in einer radial äußeren Position dazu durch eine formschlüssige Kupplung assoziiert ist.

10. Radialreifen mit separater Lauffläche nach Anspruch 9, wobei der Laufflächenring (3) mindestens eine Null-Grad-Lage (16) umfasst.

## Revendications

1. Structure porteuse (2) d'un pneu radial à bande de roulement séparée (1) comprenant au moins une nappe carcasse (8), ladite nappe carcasse comprenant :
une partie centrale (8a) se prolongeant entre deux structures d'ancrage annulaires (9) disposées en correspondance d'un diamètre intérieur du pneu correspondant au diamètre de la jante du pneu sur une jante de montage respective, et
deux parties d'extrémité (8b) se prolongeant en continu à partir de ladite partie centrale (8a) jusqu'à un bord libre (10), dans laquelle chaque partie d'extrémité (8b) est retournée autour de l'une des structures d'ancrage annulaires (9) et disposée le long du profil défini par la partie centrale (8a) à l'extérieur de celle-ci,
chaque partie d'extrémité (8b) comporte, le long du profil défini par la partie centrale (8a), entre la structure d'ancrage annulaire (9) respective et ledit bord libre (10), une longueur (L) supérieure à une hauteur de la structure d'ancrage annulaire (9) respective, de sorte que ledit bord libre (10) est disposé au-delà de la structure d'ancrage annulaire elle-même et laissant libre une partie centrale de dégonflage (11) délimitée par lesdits bords libres (10) ;
**caractérisée en ce que** le bord libre (10) de la partie d'extrémité (8b) de la nappe carcasse (8) se prolonge jusqu'à une structure en couronne (4) de ladite structure porteuse de telle manière que ledit bord libre (10) est disposé en correspondance de la structure en couronne (4) de la structure porteuse.

2. Structure porteuse d'un pneu à bande de roulement séparée selon la revendication 1, dans laquelle ladite longueur (L) de chaque partie d'extrémité (8b) est telle que lesdits bords libres (10) sont disposés en face les uns des autres en correspondance de la ligne centrale de la structure porteuse.

3. Structure porteuse d'un pneu à bande de roulement séparée selon une ou plusieurs des revendications précédentes, dans laquelle ladite partie de dégonflage (11) comporte, le long du profil défini par la partie centrale (8a), une longueur (L1) plus courte que la longueur (L) des parties d'extrémité (8b).

4. Structure porteuse d'un pneu à bande de roulement séparée selon une ou plusieurs des revendications précédentes, dans laquelle ladite longueur (L) de chaque partie d'extrémité (8b) est telle qu'elle dispose lesdits bords libres (10) au-delà des éléments de remplissage (12) respectifs disposés entre les parois latérales (13) et une structure en couronne (4) de la structure porteuse.

5. Structure porteuse d'un pneu à bande de roulement séparée selon une ou plusieurs des revendications précédentes, comprenant une structure en couronne (4) comportant une couche de ceinture (14) à zéro degré disposée radialement à l'extérieur de la nappe carcasse (8), dans laquelle ladite couche de ceinture (14) à zéro degré est interrompue en correspondance de la partie centrale de dégonflage (11).

6. Structure porteuse d'un pneu à bande de roulement séparée selon la revendication 5, dans laquelle ladite structure en couronne (4) comprend des couches de ceinture (15a, 15b) se croisant, de préférence à 30 degrés, disposées radialement à l'extérieur de la couche de ceinture (14) à zéro degré.

7. Structure porteuse d'un pneu à bande de roulement séparée selon une ou plusieurs des revendications précédentes, comprenant des éléments de remplissage (12) disposés entre les parois latérales (13) et une structure en couronne (4) de la structure porteuse, dans laquelle lesdits éléments de remplissage (12) ont une dureté d'au moins 80 shore.

8. Structure porteuse d'un pneu à bande de roulement séparée selon une ou plusieurs des revendications précédentes, comprenant une structure en couronne (4) comportant, en correspondance d'une surface (5) plus radialement extérieure, des rainures et des nervures (6, 7) adaptées pour fournir un accouplement de forme avec un anneau de bande de roulement (3).

9. Pneu radial (1) à bande de roulement séparée comprenant une structure porteuse (2) selon une ou plusieurs des revendications précédentes et un anneau de bande de roulement (3) associé à ladite structure porteuse (2) dans une position radialement extérieure à celle-ci par l'intermédiaire d'un accouplement de forme.

10. Pneu radial à bande de roulement séparée selon la revendication 9, dans lequel ledit anneau de bande de roulement (3) comprend au moins une nappe (16) à zéro degré.
